# EUROPÄISCHE PATENTSCHRIFT

(11) **EP 0 510 301 B1**
(45) Veröffentlichungstag und Bekanntmachung des Hinweises auf die Patenterteilung: **22.03.1995**
(21) Anmeldenummer: 92101310.8
(22) Anmeldetag: 28.01.1992
(51) Int. Cl.: C08J 11/02, C08J 11/06

(54) **Verfahren zur Rückgewinnung von Polyurethan aus lösungsmittelhaltigen Abfallpasten aus der Polyurethan-Herstellung**
Process for recycling of polyurethane from solvent-containing waste pastes from the production of polyurethanes
Procédé de recyclage de polyuréthane à partir de déchets pâteux contenant des solvants et provenant de la fabrication de polyuréthane

(30) Priorität: 24.04.1991 DE 4113282
(43) Veröffentlichungstag der Anmeldung: 28.10.1992
(73) Patentinhaber: Firma Carl Freudenberg, 69469 Weinheim (DE)
(72) Erfinder: Hausdorf, Jörg, W-6149 Fürth (DE); Anselm, Bardo, W-6947 Laudenbach (DE); Kosack, Steffen, Dr., W-6733 Hassloch (DE)

(56) Entgegenhaltungen:
- WO-A-81/00412
- JOURNAL OF APPLIED POLYMER SCIENCE Bd. 21, Nr. 2, 1977, JOHN WILEY& SONS,INC. Seiten 581 - 584; G.A. CAMPBELL, W.C.MELUCH:'Polyurethane Waste Disposal Process Development: Amine Recovery'

## Beschreibung

Die Erfindung befaßt sich mit der Rückgewinnung von Polyurethan aus lösungsmittelhaltigen Polyurethan-Abfallpasten. Diese Pasten können auch von lackartiger Konsistenz sein.

Lösungsmittelfrei werden solche Pasten verwendet für die Herstellung von Synthetics, welche in der Schuh- und Lederwarenindustrie als Flächenware Verwendung finden, z.B. für Taschen, Koffer oder Schuh-Obermaterial.

Die Inhaltsstoffe sind Polyole und Isocyanate, die als Präpolymere vorliegen, sowie Füllstoffe, Pigmente und Verlaufsmittel.

Bei der Produktion fallen naturgemäß Fehlchargen, bei der Reinigung von Pumpen und Leitungen und durch Reste bei der Beschichtung Abfälle an. Während Pumpen und Leitungen durch das Lösungsmittel Methylethylketon gereinigt werden, liegen die anderen Abfälle lösungsmittelfrei vor.

Spezialbetriebe verarbeiten diese Pasten im Lohnauftrag durch Austreiben des Lösungsmittels, wobei je nach Lösungsmittel-Restgehalt ein hochviskoser oder stark verkrusteter Blasenrückstand erhalten wird, der als Sondermüll entsorgt werden muß. Dies gilt auch für lösungsmittelfreie Abfallpasten, die nur selten wieder der Verarbeitung zugeführt werden können. Es ist keine Möglichkeit bekannt, die Entsorgung oder Aufarbeitung derart zu modifizieren, daß die Rückstände wiederverwertet werden können.

Die Erfindung hat zur Aufgabe, die Hauptbestandteile der Paste, nämlich das Polyurethan und das Lösungsmittel, in jeweils wiederverwendbarer Form zurückzugewinnen, und zwar derart vollständig, daß die restlichen Bestandteile keinen Sondermüll mehr darstellen.

Die Lösung dieser Aufgabe besteht in einem Verfahren gemäß dem Patentanspruch. Da die anfallenden Pasten nur zum Teil lösungsmittelhaltig sind, muß ihnen vor der Verarbeitung das Lösungsmittel Methylethylketon, welches sich am geeignetsten erwies, zugefügt werden, bis sie ein Trockengewicht von 30 %, bezogen auf die lösungsmittelhaltige Paste, aufweisen. Danach wird die Paste mit dem Emulgator Acylpolyethylenglykolester im Gewichtsverhältnis 10 Teile Paste : 1 Teil Emulgator versetzt. Solche Emulgatoren sind im Handel erhältlich und spezifiziert für die Herstellung von Emulsionen von Fettsäuren, fetten Ölen, organischen Lösungsmitteln und darin gelösten organischen Stoffen. Über das Verhalten solcher Emulsionen, insbesondere über die Trennbarkeit der Inhaltsstoffe, werden keine Angaben gemacht.

Nach der Zugabe des Emulgators wird unter Rühren die zwölffache Gewichtsmenge des anfänglichen, lösungsmittelhaltigen Pastengewichts an Wasser zugegeben. Anschließend wird eine Stunde bei Raumtemperatur gerührt, um das gelöste Polyurethan in eine nicht reaktive Form zu bringen.

Aus dieser Emulsion wird anschließend mittels der bekannten Wasserdampfdestillation das Lösungsmittel ausgetrieben. Es handelt sich um die in der Chemischen Technik bekannte Trägerdampfdestillation, d. h. eine Destillation mit Wasserdampf als Träger. Sie dient dazu, hochsiedende, mit Wasser nicht oder nur wenig mischbare Flüssigkeiten schon bei 98 bis 100°C destillieren zu können. Zu dem verhältnismäßig niedrigen Dampfdruck der destillierten Flüssigkeit addiert sich dann der Dampfdruck des heißen Wasserdampfes.

Das entstandene Destillat besteht aus einer Lösungsmittel- und einer Wasser-Phase. Diese beiden Phasen werden voneinander getrennt, was durch Dekantieren oder Absaugen erfolgen kann. Das Lösungsmittel ist so rein, daß es sofort wieder verwendet werden kann; gegebenenfalls ist noch eine Trocknung über körnigem Trockenmittel erforderlich, wozu Calciumchlorid oder ein Molekularsieb dienen können.

Als Rückstand der Destillation verbleibt ein feinkörniges, in Wasser schwimmendes Polyurethan-Granulat. Die Korngröße wird dabei durch die Konzentration des Emulgators bestimmt, wobei ein geringerer Anteil, als angegeben, ein zu grobkörniges Granulat mit Lösungsmittleinschlüssen ergibt. Ein höherer Emulgatoranteil als 1 : 10 führt zu sehr feinkörnigem Granulat, welches beim Filtrieren Probleme bereiten kann.

Verfährt man gemäß der Lehre der vorliegenden Erfindung, entsteht ein Polyurethan-Granulat mit einer Korngröße von 200 bis 2000 »m. Es wird abfiltriert über ein entsprechendes Siebbandfilter und anschließend getrocknet, z.B. in einem Siebbandtrockner oder einem Trockenofen.

Das Filtrat kann als "Kunststoffabfälle verschiedener Art" zur Deponie verbracht werden oder als Polyurethan-Regenerat zur Wiederverwertung gelangen. Ohne weiteres ist dabei die Herstellung von Streumaterial für Reithallen sowie für Dränageplatten möglich.

Ohne Wasser-/Emulgator-Zusatz entsteht unter ansonsten gleichen Bedingungen nur ein stark verkrusteter oder, bei höherem Lösungsmittel-Restgehalt, hochviskoser, als Sondermüll geltender Rückstand.

Die Erfindung hat den Vorteil, daß mit einfachsten chemischen Verfahren und geringem Chemikalien- und Energieaufwand eine umweltgerechte Entsorgung, ja Wiederverwertung von Polyurethan-Abfällen möglich ist, ob diese nun ursprünglich lösungsmittelfrei oder lösungsmittelhaltig, lackartig oder pastös sind.

## Patentansprüche

1. Verfahren zur Rückgewinnung von Polyurethan aus lösungsmittelhaltigen Abfallpasten aus der Polyurethan-Herstellung, wobei das Lösungsmittel durch Destillation aus der Paste entfernt wird,
dadurch gekennzeichnet, daß man die Abfallpaste mit Methylethylketon als Lösungsmittel auf ein Trockengewicht von etwa 30 %, bezogen auf die lösungsmittelhaltige Paste, einstellt,
daß man den Emulgator Acylpolyethylenglykolester im Verhältnis 10 Teile Paste : 1 Teil Emulgator zugibt,
daß man anschließend unter Rühren mit dem Zwölffachen des anfänglichen Pastengewichts an Wasser versetzt,
daß man die entstandene Emulsion eine Stunde bei Raumtemperatur rührt,
daß man aus dieser Emulsion mittels Wasserdampf das Lösungsmittel austreibt, das entstandene zweiphasige Wasser-/Lösungsmittel-Destillat von der Wasserphase befreit
und daß man das im Blasenrückstand verbleibende, feinkörnige, in Wasser schwimmende Polyurethan-Granulat abfiltriert und trocknet.

## Claims

1. A process for the recovery of polyurethane from solvent-containing waste pastes from the production of polyurethane, in which the solvent is removed from the paste by distillation, characterized in that methyl ethyl ketone is used as solvent to adjust the waste paste to a dry weight of approximately 30%, based on the solvent-containing paste, in that the emulsifier acylpolyethylene glycol ester is added in a ratio of 10 parts of paste : 1 part of emulsifier, in that subsequently water in an amount of twelve times the initial weight of paste is added, while stirring, in that the resulting emulsion is stirred at room temperature for one hour, in that the solvent is driven off from this emulsion by means of steam and the resulting two-phase water/solvent distillate is freed from the water phase, and in that the fine polyurethane granules which remain, floating in water, in the distillation residue are filtered off and dried.

## Revendications

1. Procédé pour la récupération de polyuréthane à partir de déchets pâteux contenant des solvants et provenant de la fabrication de polyuréthane, le solvant étant séparé de la pâte par distillation, ce procédé étant caractérisé en ce que l'on établit pour le déchet pâteux, en ajoutant du méthyl éthyl cétone comme solvant, un poids à l'état sec équivalent à environ 30%, mesuré par rapport à celui des pâtes contenant des solvants,
en ce que l'on ajoute l'émulsionnant que constitue le polyéthylène glycol ester d'acyle dans une proportion de 10 parties de pâte pour 1 partie d'émulsionnant,
en ce l'on mélange ensuite, tout en remuant, avec une quantité d'eau égal à douze fois le poids de la pâte de départ,
en ce que l'on remue l'émulsion obtenue pendant une heure à température ambiante,
en ce que l'on expulse le solvant de cette émulsion au moyen de la vapeur d'eau, que l'on libère le distillat formé de deux phases, eau et solvant, de la phase aqueuse
et en ce que le granulat de polyuréthane à grains fins restant dans le résidu soufflé et flottant dans l'eau est filtré et séché.
